# EUROPÄISCHE PATENTSCHRIFT

(11) **EP 0 511 972 B1**
(45) Veröffentlichungstag und Bekanntmachung des Hinweises auf die Patenterteilung: **11.05.1994**
(21) Anmeldenummer: 91901579.2
(22) Anmeldetag: 09.01.1991
(51) Int. Cl.: H01R 39/32, H02K 13/04

(54) **KOMMUTATOR FÜR EINE ELEKTRISCHE MASCHINE**
COMMUTATOR FOR AN ELECTRIC MOTOR
COLLECTEUR POUR UNE MACHINE ELECTRIQUE

(30) Priorität: 25.01.1990 DE 4002106
(43) Veröffentlichungstag der Anmeldung: 11.11.1992
(73) Patentinhaber: ROBERT BOSCH GMBH, 70442 Stuttgart (DE)
(72) Erfinder: WUERTH, Hans, D-7140 Ludwigsburg (DE); ARMBRUSTER, Franz, D-7000 Stuttgart 31 (DE); Braun, Helmut, W-7120 Bietigheim-Bissingen (DE); Kessler, Hans-Juergen Dipl.-Ing., W-7129 Zaberfeld (DE); Soellick, Juergen, W-3400Goettingen (DE); Borrmann, Paul Dipl.-Ing., W-3400 Goettingen (DE); Gohde, Klaus, W-3400 Goettingen (DE); Wagner, Heinz, W-3408 Duderstadt (DE); Seeliger, Juergen Dipl.-Ing., W-3400 Goettingen (DE); Henkel, Reinhard, W-3406 Bovenden (DE); Kroeger, Uwe Dipl.-Ing., W-3400 Goettingen (DE)
(86) Internationale Anmeldenummer: DE9100006
(87) Internationale Veröffentlichungsnummer: WO9111837

(56) Entgegenhaltungen:
- DE-U- 8 709 301
- FR-A- 2 639 163
- PATENT ABSTRACTS OF JAPAN, Vol. 5, No. 103 (E-64) (775), 03 July 1981, & JP-A-56 46647
- PATENT ABSTRACTS OF JAPAN, Vol. 11, No.143 (E-504) (2590) 09 May 1987, & JP-A-61 280731

## Beschreibung

### Stand der Technik

Die Erfindung betrifft einen Kommutator für elektrische Maschinen, nach dem Oberbegriff des Hauptanspruchs.

Es sind verschiedene Ausgestaltungen für die Anordnung und Verbindung der Wicklungsenden einer Rotorwicklung einer elektrischen Maschine mit Segmenten eines Kommutators bekannt.

Aus der DE-A- 35 30 652 ist ein Kommutator für elektrische Maschinen bekannt, der zwischen seinen Segmenten sich radial erstreckende Isolierlamellen aufweist, die sich nach außen keilförmig verbreitern. Sie bilden zwischen sich Kammern aus, in die aus Runddraht bestehende Wicklungsenden der Rotorwicklung der elektrischen Maschine eingebracht werden. Es sind zwei Wicklungsenden vorgesehen, die übereinander liegen und in dieser Position miteinander sowie an den Boden der Kammer durch Schweißen befestigt sind. Zur Erhöhung der Schleuderfestigkeit kann zusätzlich eine Rotorbandage die Kammern nach außen hin abschließen. Die für die Kammerbildung benötigten Isolierlamellen führen zu einer relativ aufwendigen und damit kostenintensiven Ausbildung.

Aus der japanischen Patentschrift 55-10816 ist ein Kommutator für einen Elektromotor bekannt, der ebenfalls mit Schlitzen versehene Segmente aufweist. Die Drahtenden der Rotorwicklung, die aus Runddraht besteht, werden mit einem Zickzackprofil versehen, das mit den Schlitzwandungen zusammenwirkt.

Ferner zeigt die DE-A- 31 28 626 einen Kommutator für elektrische Maschinen, bei der Spezialprofil-Drähte eingesetzt sind. Die Wicklungsenden der Rotorwicklung werden in Schlitze der Kommutatorsegmente eingebracht und mit einem speziellen Werkzeugstempel verpreßt, so daß die übereinanderliegenden Wicklungsenden in engen Kontakt zueinander gebracht werden und gleichzeitig ein Segmentbereich derart plastisch verformt wird, daß sich eine elektrische und auch mechanisch feste Verbindung an der Lamellenfahne ergibt.

Auch bei der DE-A 27 39 730 werden spezialprofilierte Rotorwicklungsdrähte eingesetzt. Diese können zum Beispiel einen rechteckförmigen Querschnitt aufweisen. Mittels Schweißung werden die Wicklungsenden stumpf aufeinander und auf die entsprechende Kommutatorlamelle verschweißt. Dabei können sie mit ihren Schmalseiten aufeinanderliegen oder auch mit ihren Breitseiten.

Schließlich ist es aus der JP-A- 56-46 647 (Abstract aus Vol. 5 Number 103/E64/775) bekannt, an jedem Kommutatorsegment zwei Wicklungsenden in radialer Richtung übereinanderliegend anzuordnen, die durch Materialentfernung kreisabschnittförmige Auflageflächen füreinander bzw. für das Ende der Kommutatorsegmente aufweisen und die an diesen Flächen miteinander bzw. mit dem Kommutatorsegment flächig verschweißt sind. Die flächigen Auflagen behindern zwar das Verrutschen der Wicklungsenden beim Schweißvorgang, verringern jedoch durch die begrenzte maximale Strombelastung der Kommutatorsegmente die Stromdichte in den relativ großen Schweißflächen beim Schweißvorgang.

Mit der erfindungsgemäßen Lösung wird angestrebt, die Wicklungsenden unverrutschbar miteinander und mit den Kommutatorsegmenten möglichst zuverlässig zu verschweißen.

### Vorteile der Erfindung

Der erfindungsgemäße Kommutator mit den im Hauptanspruch genannten Merkmalen hat demgegenüber den Vorteil, daß trotz des Einsatzes von Runddraht für die Rotorwicklung und ohne geschlitzte Kommutatorausbildung bzw. ohne Isolierlamellen des Kommutators eine exakte Positionierung bei dem Verschweißen der Wicklungsenden möglich ist, ohne daß es dabei zu einem Verrutschen oder dergleichen kommt. Trotz des Fehlens von Aufnahmekammern für die Wicklungsenden ist eine einfache Handhabung und präzise Anordnung bei der Schweißung möglich. Da die jedem Segment zugeordneten Wicklungsenden freiliegen, ist der Kommutator sehr einfach aufgebaut. Die Wicklungsenden lassen sich großflächig und verschiebungsfrei miteinander verschweißen, da sie durch kreisabschnittsförmige Materialverdrängung-/entfernung gebildete Präge-/Bearbeitungsflächen aufweisen, wodurch entsprechend große Auflageflächen entstehen. Überdies stellen diese relativ großen Prägeflächen/Bearbeitungsflächen elektrische Verbindungen mit nur sehr kleinem Übergangs widerstand sicher. Zusätzlich oder alternativ kann auch das untere Wicklungsende über eine derartige Prägefläche bzw. Bearbeitungsfläche mit dem Segment durch Schweißung flächig verbunden sein. Dabei ist nach der Erfindung vorgesehen, daß die dem unteren Wicklungsende zugeordnete Drahtauflagefläche Wärmestaurillen aufweist. Da die Drahtauflagefläche die erwähnten Wärmestaurillen aufweist, ergibt sich an den Rillen jeweils eine besonders große Schweißstromdichte, die ein einwandfreies Verschweißen sicherstellt.

Vorteilhaft ist es, wenn die Wärmestaurillen in Umfangsrichtung des Kommutators verlaufen.

Nach einer besonderen Ausführungsform der Erfindung ist vorgesehen, daß die Drahtauflagefläche den Grund einer Fixiernut bildet, die in Richtung der Längserstreckung der Wicklungsenden verläuft. Die kreisförmige Kontur des unteren Wicklungsendes findet in der Fixiernut eine Mehrpunktabsstützung, so daß der untere Wicklungsdraht beim Schweißvorgang nicht verrutschen kann. Selbstverständlich kann der Grund der Fixiernut ebenfalls mit Wärmestaurillen versehen werden.

### Zeichnung

Die Zeichnungen veranschaulichen die Erfindung anhand mehrere Ausführungsbeispiele; und zwar zeigt:
- Figur 1: einen Querschnitt durch einen Abschnitt eines Kommutators einer elektrischen Maschine,
- Figur 2: eine Darstellung gemäß Figur 1 nach einer anderen Ausführungsform,
- Figur 3: eine weitere Ausführungsform einer Ausbildung gemäß Figur 2 und
- Figur 4: eine Ansicht auf eine Drahtauflagefläche des Kommutators in Richtung des Pfeils A in Figur 1 bzw. 2.

### Beschreibung von Ausführungsbeispielen

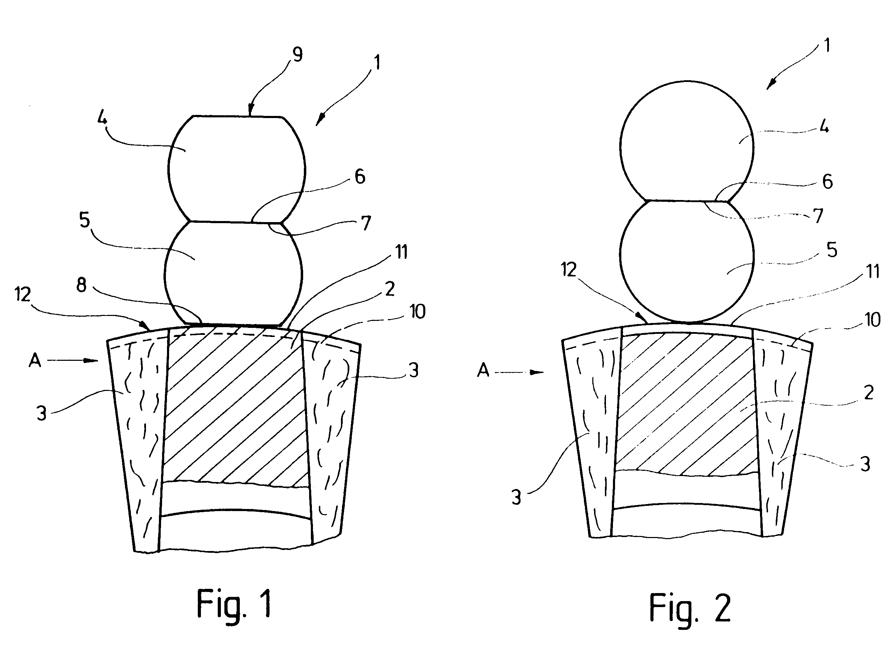

Die Figur 1 zeigt einen Querschnitt durch einen Teilabschnitt eines Kommutators 1 im Bereich eines Segments 2, das aus leitfähigem Material besteht. Beidseitig des Segments 2 schließen sich weitere, nicht dargestellte Segmente an, die mittels Isolierstege 3 untereinander isoliert sind. Außerhalb des mit Kohlebürsten zusammenwirkenden Bereichs des Kommutators 1 sind die Wicklungsenden 4,5 einer Rotorwicklung einer den Kommutator 1 aufweisenden elektrischen Maschine mit dem Segment 2 verbunden. Hierzu werden die aus Runddraht bestehenden Wicklungsenden 4,5 in ihrem Verbindungsbereich mit durch kreisabschnittsförmiger Materialverdrängung/-entfernung gebildeten Prägeflächen/Bearbeitungsflächen 6,7 versehen. Hierdurch können die Wicklungsenden 4,5 flächig übereinanderliegend am hinteren Ende des Segmentes 2 angeordnet und zur Verschweißung miteinander und mit dem Segment 2 radial mit einer Elektrode beaufschlagt werden, ohne daß sie dabei relativ zueinander verrutschen. Die Wicklungsenden 4 und 5 sind somit freiliegend am Kommutator 1 angeordnet.

Wie aus der Figur 1 ersichtlich, kann auch an der Unterseite des zuunterst liegenden Wicklungsendes 5 eine Prägefläche/Bearbeitungsfläche 8 ausgebildet sein, die ebenfalls durch kreisabschnittsförmige Materialverdrängung/-entfernung gebildet ist. Dieses kann ferner für die Oberseite des Wicklungsendes 4 gelten; das heißt, auch dort liegt eine Prägefläche/Bearbeitungsfläche 9. Je nach Ausbildungsform des Kommutators/Rotors können somit an der Prägefläche/Bearbeitungsfläche 9 weitere Wicklungsenden durch Schweißung angeschlossen werden.

Eine gestrichelte Linie 10 deutet in der Figur 1 an, daß die Drahtauflagefläche 11 des Kommutators 1, das heißt, die Außenseite des Segments 2 mit Wärmestaurillen 12 versehen ist. Die Wärmestaurillen 12 verlaufen in Umfangsrichtung des Kommutators 1. Ihre konkrete Ausbildung geht aus der Figur 4 hervor. Sie bilden eine Trapezkurve, das heißt, sie sind mit schrägwinklig verlaufenden Flanken versehen. Die Steghöhe beträgt vorzugsweise 0,3 mm und jede der oberen Stegflächen weist etwa eine Breite von 0,2 mm auf. Die Wärmestaurillen 12 können gegebenenfalls auch an den Wicklungsenden 5 anstatt an den Segmenten 2 angebracht sein.

Die Figur 2 zeigt ein weiteres Ausführungsbeispiel, bei dem -im Gegensatz zum Ausführungsbeispiel der Figur 1- nur im Anlagebereich zwischen dem Wicklungsende 4 und dem Wicklungsende 5 Prägeflächen/Bearbeitungsflächen 6 bzw. 7 ausgebildet sind.

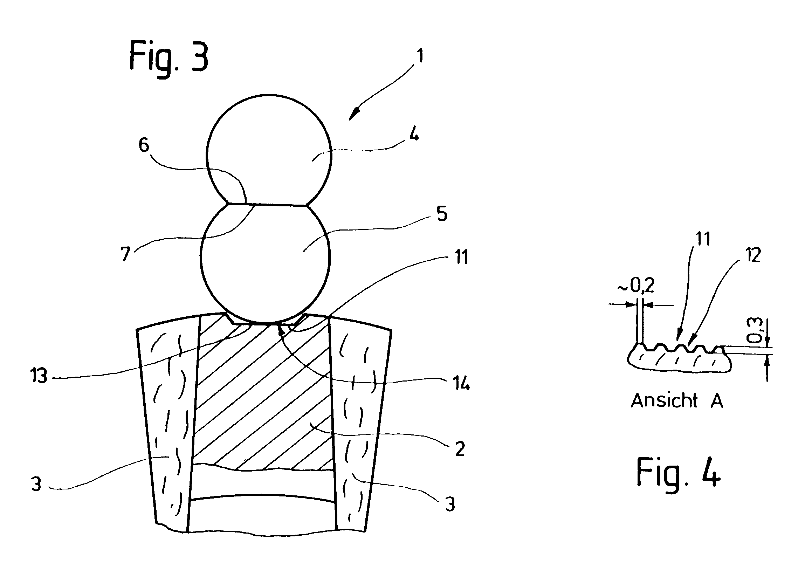

Das Ausführungsbeispiel der Figur 3 zeigt eine Ausgestaltung wie in der Figur 2, wobei jedoch die Drahtauflagefläche 11 von dem Grund 13 einer Fixiernut 14 gebildet ist, die in Richtung der Längserstreckung der Wicklungsenden 4,5 verläuft. Hierdurch erhält die teilkreisförmige Unterseite des Wicklungsendes 5 eine Lagefixierung, so daß dieses beim Schweißvorgang nicht relativ zum Segment 2 verrutschen kann.

## Patentansprüche

1. Kommutatoranschluß an die Rotorwicklung einer elektrischen Maschine, mit einer Vielzahl von Segmenten (2), die an ihren hinteren Abschnitten mit Wicklungsenden (4, 5) der aus Runddraht bestehenden Rotorwicklung der Maschine durch Schweißung verbunden sind, wobei an jedem Segment zumindest zwei Wicklungsenden in radialer Richtung übereinanderliegend angeordnet sind, sowie seitlich frei liegen und über durch kreisabschnittsförmige Materialverdrängung/-entfernung gebildete aufeinanderliegende Prägeflächen/Bearbeitungsflächen (6, 7, 8, 9) miteinander flächig verschweißt sind, dadurch gekennzeichnet, daß die dem unteren Wicklungsende (5) zugeordnete Auflagefläche (11) von Wicklungsende (5) und Kommutatorsegment (2) Wärmestaurillen (12) für Schweißvorgänge aufweist.

2. Kommutatoranschluß nach Anspruch 1, dadurch gekennzeichnet, daß die Wärmestaurillen (12) an den Kommutatorsegmenten (2) angeordnet sind und in Umfangsrichtung des Kommutators (1) verlaufen.

3. Kommutatoranschluß nach einem der vorhergehenden Ansprüche, dadurch gekennzeichnet, daß die Drahtauflagefläche (11) auf dem Grund (13) einer Fixiernut (14) am Ende eines jeden Segmentes (2) liegt, die in Richtung der Längserstreckung der Wicklungsenden (4, 5) verläuft.

4. Kommutatoranschluß nach einem der vorhergehenden Ansprüche, dadurch gekennzeichnet, daß das unten liegende Wicklungsende (5) über eine Prägefläche/Bearbeitungsfläche (8) mit dem Segment (2) durch Schweißung flächig verbunden ist.

## Claims

1. Commutator connection to the rotor winding of an electric machine, having a multiplicity of segments (2) which, at their rear ends, are connected by welding to winding ends (4, 5) of the rotor winding, composed of round wire, of the machine, at least two winding ends being arranged one lying on top of the other in the radial direction on each segment, as well as being exposed laterally and being welded to one another in a planar fashion via die stamped/machined surfaces (6, 7, 8, 9) which lie one on top of the other and are formed by circular-segment shaped material displacement/removal characterised in that the support surface (11) of winding end (5) and commutator segment (2) associated with the lower winding end (5) has heat accumulation channels (12) for welding procedures.

2. Commutator connection according to Claim 1, characterised in that the heat accumulation channels (12) are arranged on the commutator segments (2) and run in the circumferential direction of the commutator (1).

3. Commutator connection according to one of the preceding claims, characterised in that the wire support surface (11) is located on the base (13) of a fixing groove (14) at the end of each segment (2), which groove runs in the direction of the longitudinal extent of the winding ends (4, 5).

4. Commutator connection according to one of the preceding claims, characterised in that the lower winding end (5) is connected to the segment (2) in a planar fashion via a die stamped/machined surface (8) by welding.

## Revendications

1. Raccordement de collecteur à l'enroulement du rotor d'un moteur électrique, avec une multiplicité de segments (2) reliés par soudage sur leurs sections postérieures aux extrémités (4, 5) de l'enroulement du rotor consistant en fils de section circulaire, au moins deux extrémités d'enroulement de chaque segment étant disposées l'une au-dessus de l'autre dans le sens radial et reposent ainsi librement sur le côté en étant soudées à plat les unes aux autres au moyen de faces dressées/faces usinées (6, 7, 8, 9) reposant l'une sur l'autre, formées par refoulement de matière/enlèvement de matière en forme de secteur circulaire, raccordement de collecteur caractérisé en ce que la surface d'appui (11) associée à l'extrémité inférieure (5) d'enroulement, de l'extrémité de l'enroulement (5) et du segment de collecteur (2), présente des rainures d'accumulation de chaleur (12) pour les processus de soudage.

2. Raccordement de collecteur selon la revendication 1, caractérisé en ce que les rainures d'accumulation de chaleur (12) sont disposées sur les segments du collecteur (2) et s'étendent dans le sens périphérique du commutateur (1).

3. Raccordement de collecteur selon l'une des revendications précédentes, caractérisé en ce que la surface d'appui des fils (11) repose sur le fond (13) d'une rainure de fixation (14) à l'extrémité de l'un des segments (2), rainure qui s'étend dans le sens longitudinal des extrémités d'enroulement (4, 5).

4. Raccordement de collecteur selon l'une des revendications précédentes, caractérisé en ce que l'extrémité inférieure de l'enroulement (5) est reliée à plat au segment (2) par soudage, au moyen d'une face dressée/face usinée (8).
